# EUROPÄISCHE PATENTSCHRIFT

(11) **EP 2 862 696 B1**
(45) Veröffentlichungstag und Bekanntmachung des Hinweises auf die Patenterteilung: **10.01.2018**
(21) Anmeldenummer: 13188727.5
(22) Anmeldetag: 15.10.2013
(51) Int. Cl.: B29C 65/08, B29C 65/74, A01G 25/02, B29L 23/00

(54) **Verfahren zum Anbringen eines Anschlussstückes in der Wandung eines Wasserzuführschlauchs**
Method for applying a connection piece in the wall of a water supply hose
Procédé d'insertion d'une pièce de raccordement dans la paroi d'un tuyau d'amenée d'eau

(43) Veröffentlichungstag der Anmeldung: 22.04.2015
(73) Patentinhaber: THE Machines Yvonand SA, 1462 Yvonand (CH)
(72) Erfinder: Reith, Wolfgang, 1462 Yvonand (CH); Loebinger, Ahai, 1462 Yvonand (CH)
(74) Vertreter: BOVARD AG

(56) Entgegenhaltungen:
- FR-A1- 2 752 610
- US-A1- 2006 103 131

## Beschreibung

Die vorliegende Erfindung bezieht sich auf ein Verfahren zum Anbringen eines Anschlussstückes in der Wandung eines Wasserzuführschlauches insbesondere für Tropfbewässerungsrohre, bei welchem ein aus mehreren Schichten bestehendes Band, gebildet aus thermoplastischem Material und Gewebeschichten, das die Wandung des Wasserzuführschlauches bildet, durch eine Ultraschall-Stanzeinrichtung geführt wird, in welcher ein Butzen durch eine als Lochstempel ausgebildete Sonotrode und einen als Lochmatrize ausgebildeten Amboss aus dem Band ausgestanzt wird, zwischen welchen das Band hindurchgeführt wird, und beim Ausstanzen des Butzens aus dem Band die Randbereiche und die benachbarten Oberflächenbereiche der entstandenen Öffnung verschmolzen und versiegelt werden, in welche entstandene Öffnung mindestens ein Teil des Anschlussstückes eingesetzt und mit der Wandung des Wasserzuführschlauches verbunden wird, und das Band danach zu einer Rohrform gefaltet und verschweisst wird.

Es ist bekannt, dass zur Bewässerung von Kulturflächen Tropfbewässerungsrohre eingesetzt werden, mit welchen eine direkte Bewässerung der in diesen Kulturflächen eingesetzten Pflanzen ermöglicht wird. Um ganze Kulturflächen mit dieser sparsamen und effizienten Methode bewässern zu können, wird ein Netz von Tropfbewässerungsrohren ausgelegt, in welche das Wasser eingespiesen wird. Zur Einspeisung des Wassers in diese Tropfbewässerungsrohre werden Wasserzuführrohre oder Wasserzuführschläuche verwendet, welche mit Anschlussstücken versehen sind, an welchen die Tropfbewässerungsrohre einzeln oder, wenn Verteiler angebracht werden, mehrfach angeschlossen werden können.

Um eine optimale Tropfbewässerung aller Pflanzen gewährleisten zu können, die beispielsweise auch am Schluss eines relativ langen Tropfbewässerungsrohres angepflanzt sind, muss die Wasserzuführung unter einem gewissen Druck erfolgen, wodurch eine entsprechende Festigkeit des Rohres bzw. Schlauches gewährleistet sein muss.

Für die Wasserzuführung werden oftmals steife Kunststoffrohre verwendet, die beispielsweise aus Polyäthylen gebildet sind, die die gewünschte Festigkeit aufweisen, die aber den Nachteil haben, dass sie stückweise in vorgegebener Länge auf die Felder gebracht werden müssen und dort mittels Fittingen zusammengesetzt werden müssen, was sehr aufwändig ist. Diese steifen Rohre haben zudem den Nachteil, dass sie, wenn sie auf die Oberfläche der Felder aufgelegt sind, was meistens der Fall ist, durch landwirtschaftliche Fahrzeuge nicht einfach überfahren werden können.

Deshalb werden häufig Wasserzuführschläuche eingesetzt, die, wenn sie nicht unter Wasserdruck stehen, flachgedrückt sind, diese Schläuche können in grosser Länge auf Rollen gewickelt werden und so in einfacher Weise auf die Felder geführt und dort ausgelegt werden. Diese Schläuche können auch durch landwirtschaftliche Fahrzeuge überfahren werden. Um die erforderliche Festigkeit erbringen zu können, sind diese Schläuche aus mehreren miteinander verbundenen Schichten gebildet, beispielsweise Schichten aus thermoplastischem Material, insbesondere Polyäthylen, und zwischen diesen Schichten eingebetteten Gewebeschichten, mit welchen diese Schläuche verstärkt sind. Diese Schläuche können aus einem vorfabrizierten mehrschichtigen Band gefertigt werden, das zusammengefaltet wird, wobei die überlappenden Randbereiche miteinander beispielsweise verschweisst werden.

In diese Schläuche müssen die Anschlussstücke eingesetzt werden, wobei gewährleistet sein muss, dass keine undichten Stellen entstehen, auch wenn die Schläuche unter dem erforderlichen Wasserdruck stehen.

Zum Einsetzen und Befestigen von derartigen Anschlussstücken sind verschiedene Möglichkeiten bekannt. So kann beim Herstellen des Schlauches in den noch bandförmigen Zustand der Wandung ein Loch eingestanzt werden, in dieses Loch wird ein Anschlussstück eingesetzt, dieses Anschlussstück wird über eine Flanschoberfläche mit dem entsprechenden Oberflächenbereich des Bandes verbunden, beispielsweise verschweisst. Die Flanschoberfläche muss gross sein, um die gewünschte Festigkeit und eine absolute Dichtheit erreichen zu können.

Beim Ausstanzvorgang zur Erzeugung eines Loches in diesen Schlauch, in welchen das Anschlussstück dann eingesetzt wird, kann das Material, das die Wandung des Schlauches bildet, um den Rand des ausgestanzten Loches verletzt werden. Im Bereich des Lochrandes können Fäden des eingebetteten Gewebes aus der Verbindung mit den Thermoplast-Schichten ausgerissen oder zumindest von der Verbindung mit dem umgebenden Material gelöst werden, was eine Schwächung des Materials in diesem Bereich zur Folge hat. Somit ist es erforderlich, dass die Anschlussstücke grossflächig um das Loch herum mit der Wandung verbunden werden, zudem ist es erforderlich, dass der Schlauch, um diese Schwächung ausmerzen zu können, eine höhere Festigkeit aufweisen muss, was gleichbedeutend ist, dass die Wandung des Schlauches dicker ausgestaltet sein muss, als es erforderlich wäre, um den herrschenden Wasserdruck aushalten zu können, wodurch zur Herstellung des Rohres mehr Material eingesetzt werden muss, was sich auf die Kosten auswirkt.

Aus der Veröffentlichung US 2006/0103131 A1 ist ein Verfahren bekannt, mittels welchem die Ränder der Löcher versiegelt werden, beispielsweise durch Ultraschall-Stanzung.

Die Aufgabe der vorliegenden Erfindung besteht somit darin, ein Verfahren zum Anbringen von Anschlussstücken in der Wandung eines Wasserzuführschlauches zu schaffen, bei welchem die oben genannten Nachteile nicht enthalten sind, bei welchem gewährleistet ist, dass eine optimale Verbindung zwischen Anschlussstück und Wandung des Schlauches erreicht werden kann, und welches einfach angewendet werden kann.

Erfindungsgemäss erfolgt die Lösung dieser Aufgabe dadurch, dass in die im Band angebrachte Öffnung von der einen Seite her ein erster Teil des Anschlussstückes eingesetzt wird und von der anderen Seite her ein zweiter Teil des Anschlussstückes auf den ersten Teil des Anschlussstückes aufgesetzt wird, und dass das Band mit den in die Öffnungen eingesetzten ersten Teilen und zweiten Teilen (6) zwischen einer Sonotrode und einem Amboss einer Ultraschall-Schweissanlage hindurchgeführt wird und jeweils der erste Teil des Anschlussstückes und der zweite Teil des Anschlussstückes miteinander und mit dem Band verschweisst werden.

Mit diesem erfindungsgemässen Verfahren wird nicht nur erreicht, dass mit dem Ausstanzen des Butzens aus dem Band der Randbereich der entstandenen Öffnung mit den Gewebeteilen neu verschmolzen wird, wodurch gewährleistet ist, dass die Festigkeit des Bandes auch in diesem Lochbereich nicht geschwächt wird. Indem in die im Band angebrachte Öffnung von der einen Seite her ein erster Teil des Anschlussstückes eingesetzt wird und von der anderen Seite her ein zweiter Teil des Anschlussstückes auf den ersten Teil des Anschlussstückes aufgesetzt wird, werden die an den Randbereich angrenzenden Oberflächenbereiche des Bandes durch die beiden eingesetzten Teile zusätzlich verstärkt. Das Band mit den in die Öffnungen eingesetzten ersten Teilen und zweiten Teilen wird zwischen einer Sonotrode und einem Amboss einer Ultraschall-Schweissanlage hindurchgeführt, wodurch optimale Dichtheit erreicht und ein effizienter und schnell durchführbarer Verbindungsvorgang erhalten wird.

In vorteilhafter Weise werden die Sonotrode und die Lochmatrize der Ultraschall-Stanzeinrichtung soweit zusammengefahren, dass die an den Randbereich angrenzenden Oberflächenbereiche des Bandes ebenfalls einem Schmelzprozess unterworfen und versiegelt werden, wodurch auch in diesen Bereichen die gewünschte Kompaktheit der Materialien, aus welchen das Band gebildet ist, gewährleistet ist.

In vorteilhafter Weise ist der erste Teil des Anschlussstückes mit einem ringförmigen Vorsprung und der zweite Teil des Anschlussstückes mit einer entsprechenden ringförmigen Ausnehmung versehen, die beim Zusammenfügen der beiden Teile ineinander gedrückt werden, was den Einsetzvorgang in das Band vereinfacht und die Zuführung zur Ultraschall-Schweissanlage erleichtert.

Eine weitere vorteilhafte Ausgestaltung der Erfindung besteht darin, dass beim Zusammenfügen der beiden Teile die gegen das Band gerichtete ringförmige Oberfläche des zweiten Teils mit einer umlaufenden Rippe
versehen ist, über welchen der Beginn des Schweissvorgangs mit dem Oberflächenbereich des Bandes ausgelöst wird. Durch diese Vorkehrung kann der Beginn des Verschweissens örtlich genau festgelegt werden, was sich auf die Qualität der Verschweissung auswirkt.

Derselbe vorteilhafte Effekt wird erreicht, indem in der ringförmigen Ausnehmung des zweiten Teils des Anschlussstückes eine umlaufende Schulter angebracht ist, über welche der Beginn des Verschmelzens zwischen erstem Teil und zweitem Teil des Anschlussstückes ausgelöst wird.

In vorteilhafter Weise wird zwischen dem ringförmigen Vorsprung und der entsprechenden ringförmigen Ausnehmung des zweiten Teils des Anschlussstückes beim Zusammenpressen der beiden Teile ein Hohlraum gebildet, in welchem überschüssiges geschmolzenes Material aufgenommen wird, was sich ebenfalls auf die Qualität der Verbindung auswirkt.

Das erfindungsgemässe Verfahren wird nachfolgend anhand der beiliegenden Zeichnung beispielhaft näher erläutert.

Es zeigt
Fig. 1 in schematischer Darstellung den Vorgang des Anbringens der Öffnung und des Einsetzens des Anschlussstückes in diese Öffnung des Bandes mit anschliessender Verschweissung;
Fig. 2 in schematischer Darstellung das Anbringen der Öffnung in das Band; und
Fig. 3 in schematischer Darstellung das Einsetzen des Anschlussstückes in die Öffnung mit nachfolgender Verschweissung durch Ultraschallschweissen.

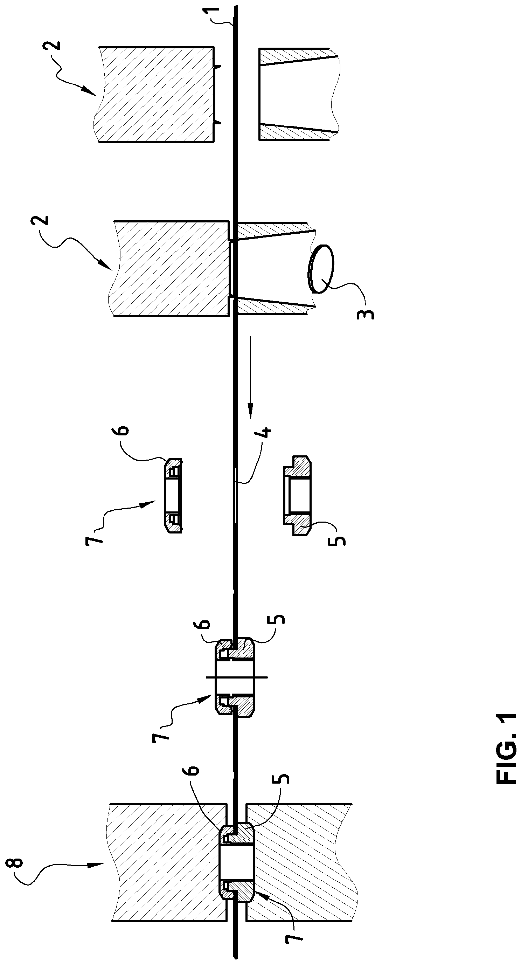

Wie aus Fig. 1 ersichtlich ist, wird ein Band 1 durch eine Ultraschall-Stanzeinrichtung 2 hindurchgeführt. In dieser Ultraschall-Stanzeinrichtung 2 wird aus dem Band 1 ein Butzen 3 ausgestanzt, wie später noch im Detail beschrieben wird. Das Band 1 mit den derartig darin angebrachten Öffnungen 4 durchläuft danach bekannte, nicht dargestellte Zuführeinrichtungen, mittels welchen von unten her ein erster Teil 5 in die jeweilige Öffnung 4 eingesetzt wird, während von oben her ein zweiter Teil 6 auf den ersten Teil 5 aufgesetzt wird, welche beiden Teile 5 und 6 ein Anschlussstück 7 bilden, an welche dann die Tropfbewässerungsrohre angekoppelt werden können. Diese Anschlussstücke 7 durchlaufen zusammen mit dem Band 1 eine Ultraschall-Schweissanlage 8, in welcher der erste Teil 5 mit dem zweiten Teil 6 und gemeinsam mit dem Band 1 verschweisst werden. Das mit diesen Anschlussstücken 7 versehene Band 1 kann dann in bekannter, nicht dargestellter Weise in eine Anlage weitergeleitet werden, in welcher das Band 1 gefaltet wird und die übereinander gelegten Randbereiche fortlaufend miteinander verschweisst werden, so dass ein Wasserzuführschlauch gebildet wird. Die Verschweissung kann auch hier durch eine Ultraschall-Schweissanlage erfolgen.

In bekannter, nicht dargestellter Weise besteht das Band 1 aus mehreren Schichten aus thermoplastischem Kunststoff, der gut schweissbar ist, insbesondere Polyäthylen, in welche zur Verstärkung Gewebelagen eingesetzt und in bekannter Weise mit den Schichten verbunden und verschmolzen sind. Der erste Teil 5 und der zweite Teil 6, die das Anschlussstück 7 bilden, sind ebenfalls aus einem thermoplastischen Kunststoff gebildet, der ebenfalls gut schweissbar ist, vorzugsweise auch Polyäthylen.

In bekannter Weise kann das Band 1 die vorgängig beschriebenen Bearbeitungsstationen kontinuierlich durchlaufen, wobei die Arbeitsstationen taktweise während des Bearbeitungsvorgangs mit dem Band mitlaufen, das Band 1 kann aber auch taktweise durch die genannten Bearbeitungsstationen durchgeführt werden, die Bearbeitungsstationen sind hierbei ortsfest angeordnet, während des Bearbeitungsvorgangs steht das Band 1 kurzzeitig still.

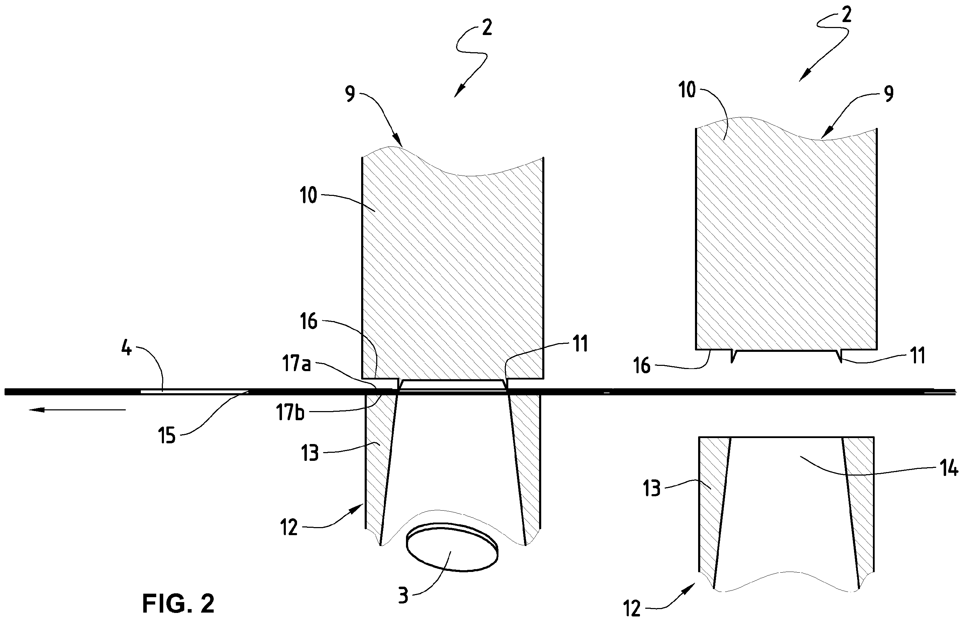

Fig. 2 zeigt die Ultraschall-Stanzeinrichtung 2, auf der rechten Seite im geöffneten Zustand, auf der linken Seite im teilweise geschlossenen Zustand. Die als Lochstempel 9 ausgebildete Sonotrode 10 weist an der dem Band 1 zugewandten Oberfläche ein ringförmiges Messer 11 auf. Der als Lochmatrize 12 ausgebildete Amboss 13 ist mit einer Ausnehmung 14 versehen, in welche das Messer 11 beim Stanzvorgang eindringen kann.

Wie aus der linksseitigen Darstellung der
Ultraschallstanzeinrichtung 2 ersichtlich ist, werden zum Stanzen Lochstempel 9 und Lochmatrize 12 aufeinander zubewegt, aus dem Band 1 wird durch das Messer 11 ein Butzen 3 ausgestanzt, der durch die Lochmatrize 12 weggeführt werden kann. An die Sonotrode 10 wird in bekannter Weise eine Schwingungsfrequenz angelegt, die im Bereich von etwa 30 kHz liegen kann und eine Wellenlänge von etwa 40 Mikrometer aufweisen kann, so dass beim Ausführen des Stanzvorgangs der Randbereich 15 der Öffnung 4, der durch das Ausstanzen des Butzens 14 entsteht, verschmolzen und versiegelt wird.

Der Lochstempel 9 und die Lochmatrize 12 werden soweit aufeinander zubewegt, bis der das Messer 11 umgebende Oberflächenbereich 16 des Lochstempels 9 mit dem entsprechenden Oberflächenbereich 17a des Bandes 1 und dem auf der Lochmatrize 12 abgestützten Oberflächenbereich 17b des Bandes 1 in Kontakt kommt. Dadurch werden diese Oberflächenbereich 17a und 17b des Bandes 1 ebenfalls einem Schmelzprozess unterworfen und das Material wird versiegelt. Mit diesem Stanzverfahren ist gewährleistet, dass der Randbereich 15 der erhaltenen Öffnungen 4 und die entsprechenden Oberflächenbereiche 17a und 17b des Bandes 1 unverletzt und frisch versiegelt sind, was bei einem konventionellen Stanzvorgang nicht erreicht werden könnte. Somit ist gewährleistet, dass die Festigkeit des Bandes 1 rund um die Öffnung 4 nicht geschwächt wird.

Das Band 1 kann im Bereich, in welchem die Öffnungen 4 angebracht werden, zusätzlich verstärkt werden. Dies kann dadurch erfolgen, dass auf das Band 1 im Bereich, in welchem die Öffnungen 4 angebracht werden, ein Verstärkungsband aufgesetzt und mit diesem verbunden wird. Dieses Band weist eine Breite auf, die grösser ist als der Aussendurchmesser der in das Band 1 einzusetzende Anschlussstücke 7. Dieses Verstärkungsband besteht vorzugsweise ebenfalls aus einem thermoplastischen Kunststoff, vorzugsweise Polyäthylen. Dieses Verstärkungsband kann bei der Herstellung des Bandes 1 in dieses eingesetzt und mit diesem verbunden werden, es kann aber auch nachträglich, bspw. als Vorstufe des Anbringens der Öffnungen 4auf das Band 1 aufgesetzt und mit diesem verbunden werden. Das Verstärkungsband kommt vorteilhafterweise innerhalb des zu bildenden Wasserzuführschlauches zu liegen.

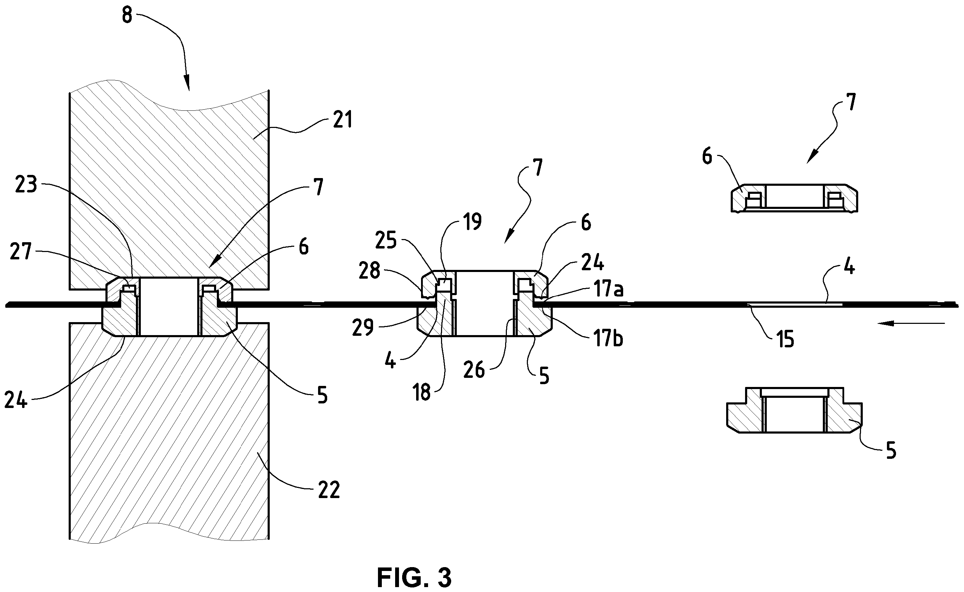

Wie aus Fig. 3 ersichtlich ist, gelangt das Band 1 mit den darin angebrachten Öffnungen 4 zur Station, in welcher die Anschlussstücke 7 eingesetzt werden. Wie bereits erwähnt, wird der erste Teil 5 von unten in die Öffnung 4 des Bandes 1 eingesetzt, auf den eingesetzten ersten Teil 5 wird der zweite Teil 6 aufgesetzt, die den Randbereich 15 der Öffnungen 4 umgebenden Oberflächenbereiche 17a und 17b des Bandes 1 werden zwischen dem ersten Teil 5 und dem zweiten Teil 6 eingeklemmt. Der erste Teil 5 des Anschlussstückes 7 ist mit einem ringförmigen Vorsprung 18 versehen, während der zweite Teil 6 des Anschlussstückes 7 mit einer entsprechenden ringförmigen Ausnehmung 19 ausgestattet ist. Beim Zusammenfügen des ersten Teils 5 mit dem zweiten Teil 6 durchragt der ringförmige Vorsprung 18 die Öffnung 4 des Bandes 1, der ringförmige Vorsprung 18 des ersten Teils 5 wird in die ringförmige Ausnehmung 19 des zweiten Teils 6 hineingedrückt und klemmend gehalten, die den Randbereich 15 benachbarten Oberflächenbereiche 17a und 17b des Bandes 1 werden zwischen diesen beiden Teilen 5 und 6 eingeklemmt.

Die so zusammengefügten Teile 5 und 6 gelangen in eine Ultraschall-Schweissanlage 8, die in bekannter Weise wiederum aus einer Sonotrode 21 und einem Amboss 22 gebildet ist. Sonotrode 21 und Amboss 22 sind wiederum gegeneinander verfahrbar, die Sonotrode 21 ist mit einer Ausnehmung 23 für die Aufnahme des zweiten Teils 6 des Anschlussstückes 7 ausgestattet, der Amboss 22 weist eine Ausnehmung 24 auf für die Aufnahme des ersten Teils 5 des Anschlussstückes 7. Die Sonotrode 21 ist wiederum mit einer Schwingungsfrequenz angeregt, beim Zusammenpressen des ersten Teils 5 mit dem zweiten Teil 6 werden diese miteinander verschweisst.

Die gegen das Band 1 gerichtete ringförmige Oberfläche 28 des zweiten Teils 6 ist mit einer vorstehenden umlaufenden Rippe 24 versehen, in der ringförmigen Ausnehmung 19 des zweiten Teils 6 ist eine umlaufende Schulter 25 angebracht. Beim Zusammenpressen der beiden Teile 5 und 6 in der Ultraschall-Schweissanlage 20 kommt die Rippe 24 zuerst in Kontakt mit dem Oberflächenbereich 17a des Bandes 1, während gleichzeitig die Schulter 25 in Kontakt kommt mit dem ringförmigen Vorsprung 18 des ersten Teils 5. Diese Stellen schmelzen beim Zusammenpressen der ersten Teile 5 und der zweiten Teile 6 in der Ultraschall-Schweissanlage 8 zuerst, die Schmelzung breitet sich dann über die weiteren Oberflächen der Kontaktstellen aus, dadurch erhält man ein kontrolliertes Verschweissen der beiden Teile 5 und 6 miteinander und mit dem Band 1.

Die gegen das Band 1 gerichtete ringförmige Oberfläche 28 des zweiten Teils 6 und die entsprechende gegen das Band 1 gerichtete ringförmige Oberfläche 29 des ersten Teils 5 können gewölbt sein und an die runde Form des Schlauches, wenn dieser unter Wasserdruck steht, angepasst sein. Die beiden Teile 5 und 6 müssen hierzu in bekannter Weise in korrekt ausgerichteter Position in das Band 1 eingesetzt werden. Dadurch kann vermieden werden, dass der unter Wasserdruck stehende, runde Schlauch im Bereich des Übergangs auf die durch den ersten Teil 5 und den zweiten Teil 6 gebildeten Anschlussstücke 7 eine Knickung des Schlauchmaterials entsteht, was zu einer Schwächung führen könnte.

Damit die Verschweissung optimal verlaufen kann, besteht zwischen dem ringförmigen Vorsprung 18 des ersten Teils 5 und der ringförmigen Ausnehmung 19 des zweiten Teils 6 beim Zusammenpressen der beiden Teile 5 und 6 ein Hohlraum 27, welcher überschüssiges geschmolzenes Material aufnehmen kann, das andernfalls irgendwohin gepresst würde und die Qualität der Verschweissung negativ beeinträchtigen könnte.

Wie bereits vorgängig erwähnt worden ist, wird das Band 1 mit den eingesetzten und verschweissten Anschlussstücken 7 von der Ultraschall-Schweissanlage 8 weitergeführt und zu einem Schlauch geformt. Dadurch wird ein Schlauch gebildet, welcher mit Anschlussstücken 7 ausgestattet ist, die voneinander einen gewünschten und vorbestimmbaren Abstand haben, in welche Anschlussstücke 7 in bekannter Weise Verbindungsstücke eingesetzt werden können, an die die Tropfbewässerungsrohre angeschlossen werden können. Im hier dargestellten Ausführungsbeispiel ist der erste Teil 5 mit einem Innengewinde 26 ausgestattet, in welches ein entsprechend ausgerüstetes Verbindungselement eingeschraubt werden kann. Diese Anschlussstücke können beispielsweise auch durch einen Deckel, der in das Innengewinde 26 des Anschlussstückes 7 eingeschraubt werden kann, verschlossen werden, wenn der entsprechende Wasseranschluss nicht gebraucht wird.

Selbstverständlich kann die Innenseite des ersten Teils 5 in geeigneter Weise auch anders ausgebildet sein, um eine dichte Verbindung mit dem Verbindungselement zu ermöglichen.

Es ist auch denkbar, dass in den beiden Randbereichen des Bandes 1 durch eine Ultraschall-Stanzeinrichtung jeweils eine Öffnung 4 angebracht wird, beim Zusammenfalten des Bandes 1 zu einer Schlauchform kommen jeweils zwei Öffnungen 4 aufeinander zu liegen. In diese entstehende eine Öffnung werden der erste Teil 5 und der zweite Teil 6 des Anschlussstückes 7 eingesetzt, der Schlauch mit den eingesetzten Anschlussstücken 7 wird dann durch die Ultraschall-Schweissanlage geführt, in welcher die Anschlussstücke 7 mit den entsprechenden Schlauchbereichen und die überlappenden Randbereiche zur Bildung des Schlauches verschweisst werden. Durch diese Herstellungsart sind die Anschlussstücke 7 im doppelwandigen Bereich des aus einem Band 1 gebildeten Schlauches angeordnet, was sich positiv auf die Festigkeit auswirkt.

Mit diesen Verfahren können in optimaler Weise Anschlussstücke in die Wandung eines Wasserzuführschlauchs eingesetzt werden, die Festigkeit der Wandung im Bereich dieser Anschlussstücke und insbesondere an den Verbindungsstellen ist gewährleistet, die Anschlussstücke und die Wandung des Wasserzuführschlauchs sind auch so stabil, dass sie, wenn sie im wasserlosen und flachgedrückten Zustand sind, ohne weiteres durch landwirtschaftliche Fahrzeuge überfahren werden können, ohne beschädigt zu werden.

## Patentansprüche

1. Verfahren zum Anbringen eines Anschlussstückes (7) in der Wandung eines Wasserzuführschlauches insbesondere für Tropfbewässerungsrohre, bei welchem ein aus mehreren Schichten bestehendes Band (1), gebildet aus thermoplastischem Material und Gewebeschichten, das die Wandung des Wasserzuführschlauches bildet, durch eine Ultraschall-Stanzeinrichtung (2) geführt wird, in weicher ein Butzen (3) durch eine als Lochstempel (9) ausgebildete Sonotrode (10) und einen als Lochmatrize (12) ausgebildeten Amboss (13) aus dem Band (1) ausgestanzt wird, zwischen welchen das Band (1) hindurchgeführt wird, und beim Ausstanzen des Butzens (3) aus dem Band (1) die Randbereiche (15) und die benachbarten Oberflächenbereiche (17a, 17b) der entstandenen Öffnung (4) verschmolzen und versiegelt werden, in welche entstandene Öffnung (4) mindestens ein Teil des Anschlussstückes (7) eingesetzt und mit der Wandung des Wasserzuführschlauches verbunden wird, und das Band (1) danach zu einer Rohrform gefaltet und verschweisst wird, **dadurch gekennzeichnet, dass** in die im Band (1) angebrachte Öffnung (4) von der einen Seite her ein erster Teil (5) des Anschlussstückes (7) eingesetzt wird und von der anderen Seite her ein zweiter Teil (6) des Anschlussstückes (7) auf den ersten Teil (5) des Anschlussstückes (7) aufgesetzt wird, und dass das Band (1) mit den in die Öffnungen (4) eingesetzten ersten Teilen (5) und zweiten Teilen (6) zwischen einer Sonotrode (21) und einem Amboss (22) einer Ultraschall-Schweissanlage (8) hindurchgeführt wird und jeweils der erste Teil (5) des Anschlussstückes (7) und der zweite Teil (6) des Anschlussstückes (7) miteinander und mit dem Band (1) verschweisst werden.

2. Verfahren nach Anspruch 1, **dadurch gekennzeichnet, dass** die Sonotrode (10) und die Lochmatrize (12) der Ultraschall-Stanzeinrichtung (2) soweit zusammengefahren werden, dass die an den Randbereich (15) angrenzenden Oberflächenbereiche (17a, 17b) des Bandes (1) ebenfalls einem Schmelzprozess unterworfen und versiegelt werden.

3. Verfahren nach Anspruch 1 oder 2, **dadurch gekennzeichnet, dass** der erste Teil (5) des Anschlussstückes (7) mit einem ringförmigen Vorsprung (18) und der zweite Teil (6) des Anschlussstückes (7) mit einer entsprechenden ringförmigen Ausnehmung (19) versehen ist, die beim Zusammenfügen der beiden Teile (5, 6) ineinander gedrückt werden.

4. Verfahren nach einem der Ansprüche 1 bis 3, **dadurch gekennzeichnet, dass** beim Zusammenfügen der beiden Teile (5, 6) die gegen das Band (1) gerichtete ringförmige Oberfläche des zweiten Teils (6) mit einer umlaufenden Rippe (24) versehen ist, über welchen der Beginn des Schweissvorgangs mit dem Oberflächenbereich (17a) des Bandes (1) ausgelöst wird.

5. Verfahren nach Anspruch 3 oder 4, **dadurch gekennzeichnet, dass** in der ringförmigen Ausnehmung (19) des zweiten Teils (6) des Anschlussstückes (7) eine umlaufende Schulter (25) angebracht ist, über welche der Beginn des Verschmelzens zwischen erstem Teil (5) und zweitem Teil (6) des Anschlussstückes (7) ausgelöst wird.

6. Verfahren nach einem der Ansprüche 3 bis 5, **dadurch gekennzeichnet, dass** zwischen dem ringförmigen Vorsprung (18) des ersten Teils (5) und der entsprechenden ringförmigen Ausnehmung (19) des zweiten Teils (6) des Anschlussstückes (7) beim Zusammenpressen der beiden Teile (5, 6) ein Hohlraum (27) gebildet wird, in welchem überschüssiges geschmolzenes Material aufgenommen wird.

## Claims

1. Method for attaching a connecting piece (7) in the walling of a water supply hose in particular for drip irrigation tubes, in which a strip (1), consisting of a multiplicity of layers, made of thermoplastic material and textile layers, which forms the wall of the water supply hose, is led through an ultrasound punching device (2), in which a scrap (3) is punched out of the strip (1) by a sonotrode (10) designed as punch (9) and an anvil (13) designed as piercing die (12), between which the strip (1) is fed through, and during stamping out of the scrap (3) out of the strip (1) the edge regions (15) and the adjacent surface regions (17a, 17b) of the resulting opening (4) are fused and sealed, into which resulting opening (4) at least part of the connecting piece (7) is inserted and is connected to the walling of the water supply hose, and the strip (1) is subsequently folded into a tube shape and welded, **characterized in that** a first part (5) of the connecting piece (7) is inserted into the opening (4) made in the strip (1) coming from the one side, and, coming from the other side, a second part (6) of the connecting piece (7) is placed on the first part (5), and **in that** the strip (1) with the first part (5) and second part (6) inserted into the openings (4) is fed between a sonotrode (21) and an anvil (22) of an ultrasound welding installation (8), and the first part (5) of the connecting piece (7) and the second part (6) of the connecting piece (7) are each welded together and welded to the strip (1).

2. Method according to claim 1, **characterized in that** the sonotrode (10) and the piercing die (12) of the ultrasound punching device (2) are driven so far together that the surface regions (17a, 17b) of the strip (1) adjacent to the edge regions (15) are likewise subjected to a melting process and are sealed.

3. Method according to claim 1 or 2, **characterized in that** the first part (5) of the connecting piece (7) is provided with an annular projection (18) and the second part (6) of the connecting piece (7) is provided with a corresponding annular recess (19), which are pressed into one another during joining together of the two parts (5, 6).

4. Method according to one of the claims 1 to 3, **characterized in that** during joining together of the two parts (5, 6), the annular surface of the second part (6) directed toward the strip (1) is provided with an encircling rib (24), via which is triggered the beginning of the welding step with the surface region (17a) of the strip (1).

5. Method according to claim 3 or 4, **characterized in that** provided in the annular recess (19) of the second part (6) of the connecting piece (7) is an encircling shoulder (25), via which is triggered the beginning of the fusing between first part (5) and second part (6) of the connecting piece (7).

6. Method according to one of the claims 3 to 5, **characterized in that** formed between the annular projection (18) of the first part (5) and the corresponding annular recess (19) of the second part (6) of the connecting piece (7) during pressing together of the two parts (5, 6) is a hollow space (27), in which excess melted material is received.

## Revendications

1. Procédé d'insertion d'une pièce de raccordement (7) dans la paroi d'un tuyau d'alimentation en eau, en particulier pour des tubes d'irrigation de type goutte-à-goutte, pour lesquels une bande (1) constituée de plusieurs couches, formée d'un matériau thermoplastique et de couches de tissu, et qui forme la paroi du tuyau d'alimentation en eau, est conduite par un dispositif de poinçonnage par ultrason (2), dans lequel une pastille (3) est découpée par poinçonnage à l'aide d'une sonotrode (10) formant un perforateur (9) et une enclume (13) formant une matrice de perforation (12) de la bande (1), entre lesquels la bande (1) est amenée à traverser, et, lors de l'opération de poinçonnage de la pastille (3) formée depuis la bande (1), les zones périphériques (15) et les zones de surface (17a, 17b) voisines de l'ouverture résultante (4) sont fusionnées et scellées, dans laquelle ouverture résultante (4) au moins une partie de la pièce de raccordement (7) est insérée et est reliée à la paroi du tuyau d'alimentation en eau, et la bande (1) est ensuite pliée et soudée sous forme tubulaire, **caractérisé en ce qu'**une première partie (5) de la pièce de raccordement (7) est insérée dans l'ouverture (4) aménagée dans la bande (1) par un premier côté, et une deuxième partie (6) de la pièce de raccordement (7) est apposée sur la première partie (5) de la pièce de raccordement (7), et que la bande (1) avec les premières parties (5) et deuxièmes parties (6) insérées dans les ouvertures (4) est passée à travers une sonotrode (21) et une enclume (22) d'un système de soudage par ultrason (8), et respectivement la première partie (5) de la pièce de raccordement (7) et la deuxième partie (6) de la pièce de raccordement (7) sont soudées à la fois l'une à l'autre et avec la bande (1).

2. Procédé selon la revendication 1, **caractérisé en ce que** la sonotrode (10) et la matrice de perforation (12) du dispositif de poinçonnage par ultrason (2) sont rapprochées de telle sorte que les zones de surface (17a, 17b) jouxtant la zone périphérique (15) de la bande (1) soient également soumises à un processus de fusion et scellées.

3. Procédé selon la revendication 1 ou 2, **caractérisé en ce que** la première partie (5) de la pièce de raccordement (7) est munie d'une protubérance annulaire (18) et la deuxième partie (6) de la pièce de raccordement (7) est munie d'une gorge annulaire (19) correspondante, qui sont chassés l'une dans l'autre lors de l'assemblage des deux parties (5, 6).

4. Procédé selon l'une des revendications 1 à 3, **caractérisé en ce que** lors de l'assemblage des deux parties (5, 6), la surface annulaire de la deuxième partie (6) dirigée vers la bande (1) est munie d'une nervure périphérique (24), via laquelle est déclenché le début du procédé de soudage avec la zone de surface (17a) de la bande (1).

5. Procédé selon la revendication 3 ou 4, **caractérisé en ce qu'**un épaulement périphérique (25) est aménagé dans la gorge annulaire (19) de la deuxième partie (6) de la pièce de raccordement (7), via lequel est déclenché le début de la fusion entre la première partie (5) et la deuxième partie (6) de la pièce de raccordement (7).

6. Procédé selon l'une des revendications 3 à 5, **caractérisé en ce qu'**un espace creux (27) est formé entre la protubérance annulaire (18) de la première partie (5) et la gorge annulaire (19) correspondante de la deuxième partie (6) de la pièce de raccordement (7) lorsque les deux parties (5, 6) sont compressées l'une contre l'autre, et dans lequel le matériau fondu excédentaire est repris.
